# EUROPEAN PATENT SPECIFICATION

(11) **EP 3 353 458 B1**
(45) Date of publication and mention of the grant of the patent: **21.08.2019**
(21) Application number: 16794418.0
(22) Date of filing: 23.09.2016
(51) Int. Cl.: F16L 37/092

(54) **QUICK-FIT CONNECTOR FOR PNEUMATIC EQUIPMENT**
SCHNELLKUPPLUNG FÜR PNEUMATISCHE APPARATUR
CONNECTEUR RAPIDE POUR ÉQUIPEMENT PNEUMATIQUE

(30) Priority: 25.09.2015 IT UB20153891
(43) Date of publication of application: 01.08.2018
(73) Proprietor: Camozzi Automation S.p.A., 25122 Brescia (IT)
(72) Inventor: GNUTTI, Gianluca, I-25122 Brescia (IT); CAMOZZI, Geromino, I-25122 Brescia (IT)
(74) Representative: Chimini, Francesco
(86) International application number: PCT/IB2016/055700
(87) International publication number: WO 2017/051369

(56) References cited:
- EP-A1- 1 143 185
- GB-A- 1 602 077
- US-A- 5 171 045

## Description

The present invention relates to a quick-fit connector for connecting a pipe to a utility or to a header, typically for the construction of pneumatic systems; the term "quick-fit connector" usually indicates a connector which, the free end of the pipe being inserted inside it, is able to retain the pipe, preventing its extraction.

There are numerous embodiments of quick-fit connectors; for example, the Applicant is the holder of the European patent granted EP1143185B1.

Typically, these connectors consist of a main hollow body, intended to be connected, at one end, with the utility or the header; the other end is instead insertable inside a tubular pincer body, provided with a flexible petal portion. The pincer body is internally provided with an annular retaining tooth which facilitates the insertion of the free end of the pipe and blocks its subsequent extraction.

Such connectors, by the very nature of their use, are used in environments which are often very dusty, and subject to being hit by splinters, fragments of welds, and the like.

The dust or splinters can sometimes creep into the interspace existing between the pincer body and the main body, compromising the operation of the connector.

In order to overcome this problem, some connectors of the prior art provide for a cover applied to the main body or to the pincer body, so as to close the access to the interspace between the pincer body and the main body. For example, the solution referred to in the document DE102007056160A1 is known. However, such solutions are difficult to produce and have high costs.

Further solutions are known for example from the document WO02059521A1, but these too are complex and expensive.

US5171045 discloses a hose coupling comprising a tubular housing and a tubular clamping member. The clamping member is adapted to be inserted into the housing. The clamping member has a cylindrical surface defining an annular groove for containing resilient elements which tend to push out the housing so as to keep the coupling in a clamping position.

The purpose of the present invention is to provide a quick-fit connector with protection cover against the entrance of dust, splinters and other pollutants, which is easy and economical to produce.

Such purpose is achieved by a quick-fit connector according to claim 1. The dependent claims describe embodiment variants.

The characteristics and advantages of the quick-fit connector according to the present invention will be evident from the description given below, by way of a nonlimiting example, according to the appended drawings, wherein:

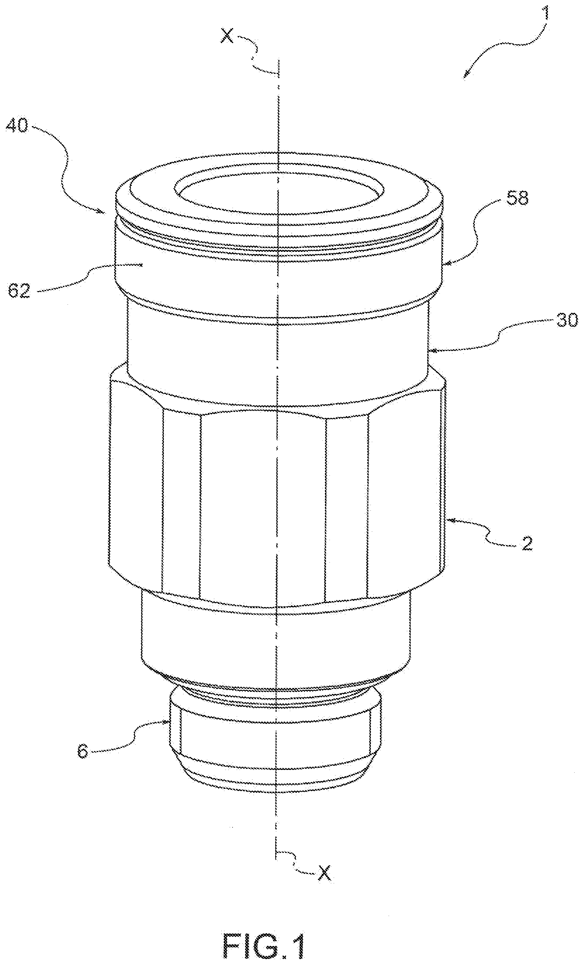

-figure 1 shows a quick-fit connector according to one embodiment of the present invention; and

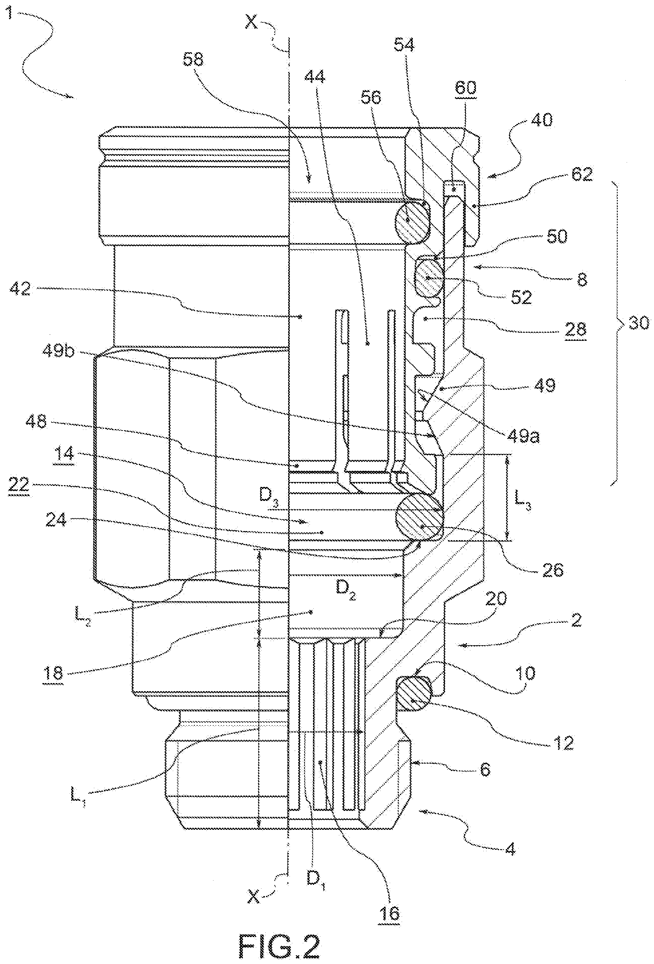

figure 2 shows a partial cross-section view of the quick-fit connector in figure 1.

With reference to the appended drawings, reference numeral 1 globally denotes a quick-fit connector for pneumatic systems, intended for connection to the free end of a pipe to a utility, such as a header, or to another pipe.

The connector 1 comprises a main tubular body 2 intended for connection with the utility or header. The main body 2 extends along a straight body axis X, from a connection end 4, suitable to engage the utility or the other pipe, for example provided with an external thread 6, and an opposite end 8.

Preferably, at the connection end 4, for example alongside the thread 6, the main body 2 has a first external annular seat 10, in which a first sealing ring 12 is housed, suitable to be subjected to axial compression when the main body 2 is screwed to the utility in a functional manner.

Internally, the main body 2 has a through cavity 14 between the connection end 4 and the opposite end 8.

The cavity 14, at the thread 6 and preferably at the first annular seat 10, has a first compartment 16 having a predefined diameter D1 and a predefined axial length L1, such as to axially contain the thread 6 and the first annular seat 10.

Preferably, the compartment 16 is internally provided with a grooved profile, used to attach the connector to the utility.

In addition, the cavity 14 comprises a second compartment 18, axially alongside the first compartment 16, having a predefined diameter D2 and an axial length L2; the second compartment 18 has a smooth side surface.

The diameter D2 of the second compartment 18 is greater than the diameter D1 of the first compartment 16, so as to form an axial stop 20 to the pipe end inserted in the connector.

Said axial stop 20 consists of a circular ring lying on an imaginary plane perpendicular to the body axis X.

The cavity 14 further comprises a third compartment 22 axially alongside the second compartment 18, having a predetermined diameter D3 and axial length L3; preferably between the second compartment 18 and third compartment 20 there is a slotted chamfer.

The diameter D3 of the third compartment 22 is greater than the diameter D2 of the second compartment 18, so as to form an axial support 24 for a second sealing ring 26; said axial support 24 consists of a circular ring lying on an imaginary plane perpendicular to the body axis X.

Lastly, the cavity 14 comprises a terminal compartment 28, alongside the third compartment 22, which extends as far as the opposite end 8 and is annularly delimited by a side wall 30 of the main body 2.

The connector 1 further comprises a pincer body 40 inserted in the main body 2, housed in the terminal compartment 28 and, preferably, at least in part, in the third compartment 22.

Inserted in the main body 2, the pincer body 40 is free to move axially in said main body, for a predefined and limited stroke.

The pincer body 40 comprises a flexible portion 42, of a generally annular cylindrical shape, comprising a plurality of petals 44, side by side and separated circumferentially.

Internally, each petal 44, in the vicinity of the free end next to the second sealing ring 26 comprises a retention prominence 48 projecting radially internally; the retention prominences 48, which are preferably aligned circumferentially, together form a retention ring of the pincer body 42, for retaining the end of the pipe inside the connector.

The retention prominences 48 simultaneously constitute a slotted chamfer to the insertion end of the pipe towards the first compartment 18, a holding tooth that prevents the extraction of the pipe towards the outside of the connector and, dimensionally interfering with the outer diameter outside the pipe, forcing the opening of the flexible petal portion during the insertion of the pipe end.

Internally, the side wall 30 has a projection 49 projecting radially inwards.

On the side facing the opposite end 8, the projection 49 forms a slotted chamfer 49a which facilitates the insertion of the pincer body 40 in the main body 2 during the assembly of the connector; on the opposite side, facing towards the third sealing ring 26, the projection 49 has a frusto-conical surface 49b which forms a narrowing which, when the pipe connected to the connector is pulled outwards, interferes with the ends of the petals 44, causing a clamping on said pipe, which prevents its extraction.

Preferably, moreover, the pincer body 40 is provided with at least one external seal, which cooperates with the main body 2.

For example, the pincer body 40 is externally provided with an annular outer sealing seat 50 in which a third sealing ring 52 is housed. Preferably, said third sealing ring 52 is radially compressed between the side wall 30 of the main body 2 and the side wall of the pincer body 40, creating a seal.

Additionally, preferably, the pincer body 40 is also provided with an inner seal, intended to cooperate with the outer surface of the pipe end.

For example the pincer body 40 has an annular inner sealing seat 50 in which a fourth sealing ring 56 is housed, designed to be radially compressed to create a seal with the pipe.

The pincer body 40 further comprises an annular base portion 58, from which, on the one hand, the petals 44 of the flexible portion 42 axially extend and which, on the opposite side, protruding from the main body, engages with said main body 2 to prevent the entrance of dust, splinters and the like in the terminal compartment 28, in the interspace between the pincer body 40 and the main body 2.

When the pincer body 40 is inserted into the main body 2, the base portion 58 protrudes at least partly from the opposite end 8 of the main body 2 and the side wall 30 of the main body 2 extends axially so as to insert itself at least in part, in a sliding manner, in the base portion 58, preventing access to the terminal compartment 28, in the interspace between the pincer body 40 and said side wall 30.

Preferably, the base portion 58 comprises an annular pocket 60, delimited radially outwards by an annular pocket wall 62, suitable to slidingly house a free end of the side wall 30. For example, the pocket wall 62 axially surmounts at least partially the side wall 30.

In one embodiment, the pocket wall 62 has an axial extension such as not to radially overlap the portion of the pincer body 40 in which the annular outer sealing seat 50 is made in which the third sealing ring 52 is housed. This way, in the production process of the connector, it is possible to make said outer sealing seat 50 with a machine tool acting radially on the pincer body.

For example, the pocket wall 62 ends at the level of, or just beyond, the internal step which delimits the annular inner sealing seat 54 for the fourth sealing ring 56. Radially overlapping the portion of the pincer body in which the annular inner sealing seat 54 is formed, in fact, it facilitates the gripping of the pincer body during the machining phase to make said annular inner sealing seat 54. Moreover, the pocket wall 62 comes to have an axial extension such as to ensure that it surmounts the side wall 30 of the main body 2 even when the pincer is in the retracted position.

Preferably, the main body 2 of the connector 1 consists of a single piece, preferably of metal material, for example brass. Typically, the connector, when straight, is produced starting from a semi-finished bar, subsequently moulded by machine tooling.

According to further embodiments, the connector 1 is made of steel, for example stainless steel, or plastic material.

Preferably, the pincer body is made of metal, typically starting from a semi-finished bar.

Innovatively, the quick-fit connector according to the present invention satisfies the need to prevent the entrance of dust or splinters in the interspace between the pincer body and the main body, and is also easy and economical to produce. There are in fact no additional components compared to a traditional connector.

It is clear that a person skilled in the art may make modifications to the quick-fit connector described above so as to satisfy contingent requirements ,all contained within the scope of protection as defined by the following claims.

## Claims

1. Quick-fit connector (1) for a pipe of a pneumatic system, comprising
- a main tubular body (2) in one piece, with a body axis (X), suitable for connecting to a utility or to a header; and
- a pincer body (40) with a flexible portion (42) housed in a terminal compartment (28) of the main body (2), said flexible portion (42) being penetrable by the pipe and suitable to prevent its extraction, and with a base portion (58) projecting outside the main body (2);
wherein the main body (2) comprises a side wall (30) slidingly insertable in the base portion (58) to prevent the entrance of dust, splinters and similar in the interspace of the terminal compartment (28) between the pincer body (40) and the main body (2), and wherein the pincer body (40) has externally, an annular outer sealing seat (50) in which a sealing ring (52) is housed, radially compressed between the side wall (30) of the main body (2) and the pincer body (40) in order to provide a seal.

2. Connector according to claim 1, wherein the base portion (58) comprises an annular pocket (60), delimited radially outwards by an annular pocket wall (62), suitable to slidingly house a free end of the side wall (30) of the main body.

3. Connector according to claim 2, wherein the pocket wall (62) axially surmounts at least partially the side wall (30) .

4. Connector according to any of the preceding claims, wherein the pincer body (40) inserted in the main body (2) is free to move axially in a predetermined and limited stroke.

5. Connector according to any of the preceding claims, wherein the side wall (30) has a projection (49) on the inside, projecting radially inwardly, suitable to engage the flexible portion (42).

6. Connector according to any of the preceding claims, wherein the pincer body (40) has internally, an annular inner sealing seat (54) in which a further sealing ring (56) is housed, designed to be radially compressed to provide a seal with the pipe.

7. Connector according to any of the preceding claims, wherein the main body (2) comprises, on the opposite side to the base portion (58) of the pincer body (40), a thread (6) .

8. Connector according to claim 7, wherein the main body (2) has externally, alongside the thread (6), a first annular seat (10) in which a first sealing ring (12) is housed, suitable to be subjected to axial compression when the main body (2) is screwed to the utility in a functional manner.

9. Connector according to claim 8, wherein the main body (2) has internally, an axial support (24) for a second sealing ring (26), against which the flexible portion (42) of the pincer body (40) abuts axially.

10. Connector according to any of the previous claims, where the flexible portion (42) of the pincer body (40) comprises a plurality of petals (44) having an axial extension, supported and separated circumferentially.

11. Connector according to claim 10, wherein each petal (44), near a free end, comprises a retention prominence (48) projecting radially inwards, which, together with the prominences (48) of the other petals (44), forms a ring for the retention of the end of the pipe inside the connector.

## Patentansprüche

1. Schnellverbinder (1) für eine Leitung eines pneumatischen Systems, umfassend
- einen Rohrhauptkörper (2) in einem Stück mit einer Körperachse (X), welcher zum Verbinden mit einer Versorgungseinrichtung oder einem Verteilerstück geeignet ist; und
- einen Zangenkörper (40) mit einem flexiblen Abschnitt (42), welcher in einem Anschlussraum (28) des Hauptkörpers (2) aufgenommen ist, wobei der flexible Abschnitt (42) durch die Leitung durchdringbar ist und dazu geeignet ist, ihr Herausziehen zu verhindern, und mit einem Basisabschnitt (58), welcher außerhalb des Hauptkörpers (2) vorsteht;
wobei der Hauptkörper (2) eine Seitenwand (30) umfasst, welche verschiebbar in den Basisabschnitt (58) einsetzbar ist, um den Eintritt von Staub, Spänen und ähnlichem in den Zwischenraum des Anschlussraums (28) zwischen dem Zangenkörper (40) und dem Hauptkörper (2) zu verhindern, und wobei der Zangenkörper (40) außenliegend eine ringförmige äußere Dichtaufnahme (50) aufweist, in welcher ein Dichtring (52) aufgenommen ist, welcher radial zwischen die Seitenwand (30) des Hauptkörpers (2) und den Zangenkörper (40) gepresst ist, um eine Dichtung bereitzustellen.

2. Verbinder nach Anspruch 1, wobei der Basisabschnitt (58) eine durch eine ringförmige Taschenwand (62) radial nach außen begrenzte ringförmige Tasche (60) umfasst, welche dazu geeignet ist, ein freies Ende der Seitenwand (30) des Hauptkörpers verschiebbar aufzunehmen.

3. Verbinder nach Anspruch 2, wobei die Taschenwand (62) die Seitenwand (30) wenigstens teilweise axial überragt.

4. Verbinder nach einem der vorhergehenden Ansprüche, wobei der in den Hauptkörper (2) eingesetzte Zangenkörper (40) über einen vorbestimmten und begrenzten Hub hinweg axial frei beweglich ist.

5. Verbinder nach einem der vorhergehenden Ansprüche, wobei die Seitenwand (30) an der Innenseite einen radial nach innen vorstehenden Vorsprung (49) aufweist, welcher dazu geeignet ist, den flexiblen Abschnitt (42) in Eingriff zu nehmen.

6. Verbinder nach einem der vorhergehenden Ansprüche, wobei der Zangenkörper (40) innenliegend eine ringförmige innere Dichtaufnahme (54) aufweist, in welcher ein weiterer Dichtring (56) aufgenommen ist, welcher derart ausgelegt ist, dass er radial gepresst ist, um eine Dichtung mit der Leitung bereitzustellen.

7. Verbinder nach einem der vorhergehenden Ansprüche, wobei der Hautkörper (2) an der dem Basisabschnitt (58) des Zangenkörpers (40) entgegengesetzten Seite ein Gewinde (6) umfasst.

8. Verbinder nach Anspruch 7, wobei der Hauptkörper (2) außenliegend entlang des Gewindes (6) eine erste ringförmige Aufnahme (10) aufweist, in welcher ein erster Dichtring (12) aufgenommen ist, welcher dazu geeignet ist, einer axialen Kompression ausgesetzt zu sein, wenn der Hauptkörper (2) in einer funktionellen Weise an die Versorgungseinrichtung geschraubt ist.

9. Verbinder nach Anspruch 8, wobei der Hauptkörper (2) innenliegend eine axiale Halterung (24) für einen zweiten Dichtring (26) aufweist, gegen welchen der flexible Abschnitt (42) des Zangenkörpers (40) axial anliegt.

10. Verbinder nach einem der vorhergehenden Ansprüche, wobei der flexible Abschnitt (42) des Zangenkörpers (40) eine Mehrzahl von Blumenblättern (44) mit einer axialen Erweiterung umfasst, welche umlaufend gehaltert und getrennt sind.

11. Verbinder nach Anspruch 10, wobei jedes Blumenblatt (44) nahe eines freien Endes eine radial nach innen vorstehende Rückhalteerhebung (48) umfasst, welche zusammen mit den Erhebungen (48) der anderen Blumenblätter (44) einen Ring für das Zurückhalten des Endes der Leitung innerhalb des Verbinders bildet.

## Revendications

1. Raccord à ajustement rapide (1) pour un tuyau d'un système pneumatique, comprenant
- un corps tubulaire principal (2) d'une seule pièce, ayant un axe de corps (X), adapté pour se raccorder à un appareil ou à collecteur ; et
- un corps de pince (40) ayant une partie flexible (42) logée dans un compartiment terminal (28) du corps principal (2), ladite partie flexible (42) pouvant être pénétrée par le tuyau et adaptée pour empêcher son extraction, et ayant une partie de base (58) saillant vers l'extérieur du corps principal (2) ;
dans lequel le corps principal (2) comprend une paroi latérale (30) pouvant être insérée de manière coulissante dans la partie de base (58) pour empêcher l'entrée de poussière, d'éclats et similaires dans l'espace intermédiaire du compartiment terminal (28) entre le corps de pince (40) et le corps principal (2), et dans lequel le corps de pince (40) comporte en externe, un siège d'étanchéité extérieur annulaire (50) dans lequel une bague d'étanchéité (52) est logée, comprimé radialement entre la paroi latérale (30) du corps principal (2) et le corps de pince (40) afin de fournir un joint d'étanchéité.

2. Raccord selon la revendication 1, dans lequel la partie de base (58) comprend une poche annulaire (60), délimitée radialement vers l'extérieur par une paroi de poche annulaire (62), adaptée pour loger de manière coulissante une extrémité libre de la paroi latérale (30) du corps principal.

3. Raccord selon la revendication 2, dans lequel la paroi de poche (62) surmonte axialement au moins partiellement la paroi latérale (30).

4. Raccord selon l'une quelconque des revendications précédentes, dans lequel le corps de pince (40) inséré dans le corps principal (2) est libre de se déplacer axialement dans une course prédéterminée et limitée.

5. Raccord selon l'une quelconque des revendications précédentes, dans lequel la paroi latérale (30) comporte une saillie (49) sur l'intérieur, faisant saillie radialement vers l'intérieur, adaptée pour être en prise avec la partie flexible (42).

6. Raccord selon l'une quelconque des revendications précédentes, dans lequel le corps de pince (40) comporte en interne, un siège d'étanchéité intérieur annulaire (54) dans lequel une bague d'étanchéité supplémentaire (56) est logée, conçu pour être comprimé radialement pour fournir un joint d'étanchéité avec le tuyau.

7. Raccord selon l'une quelconque des revendications précédentes, dans lequel le corps principal (2) comprend, sur le côté opposé à la partie de base (58) du corps de pince (40), un filetage (6).

8. Raccord selon la revendication 7, dans lequel le corps principal (2) comporte en externe, le long du filetage (6), un premier siège annulaire (10) dans lequel une première bague d'étanchéité (12) est logée, adapté pour être soumis à une compression axiale lorsque le corps principal (2) est vissé sur l'appareil de manière fonctionnelle.

9. Raccord selon la revendication 8, dans lequel le corps principal (2) comporte en interne, un support axial (24) pour une seconde bague d'étanchéité (26), contre lequel la partie flexible (42) du corps de pince (40) bute axialement.

10. Raccord selon l'une quelconque des revendications précédentes, dans lequel la partie flexible (42) du corps de pince (40) comprend une pluralité de pétales (44) ayant un prolongement axial, supportés et séparés circonférentiellement.

11. Raccord selon la revendication 10, dans lequel chaque pétale (44), près d'une extrémité libre, comprend une saillie de rétention (48) faisant saillie radialement vers l'intérieur, qui, conjointement aux saillies (48) des autres pétales (44), forme une bague pour la rétention de l'extrémité du tuyau à l'intérieur du raccord.
